# EUROPEAN PATENT SPECIFICATION

(11) **EP 1 672 250 B1**
(45) Date of publication and mention of the grant of the patent: **18.11.2009**
(21) Application number: 05027912.4
(22) Date of filing: 20.12.2005
(51) Int. Cl.: F16H 55/36

(54) **Power transmission device**
Antriebsübertragungseinrichtung
Dispositif de transmission de puissance

(30) Priority: 20.12.2004 JP 2004367136
(43) Date of publication of application: 21.06.2006
(73) Proprietor: Sanden Corporation, Isesaki-shi, Gunma 372-8502 (JP)
(72) Inventor: Ozawa, Atsushi, Isesaki-shi Gunma 372-8502 (JP); Ichinose, Hirokazu, Isesaki-shi Gunma 372-8502 (JP); Yoshida, Motoaki, Isesaki-shi Gunma 372-8502 (JP)
(74) Representative: Hofer, Dorothea

(56) References cited:
- DE-A1- 19 955 262
- FR-A- 2 853 372
- US-A- 5 856 719
- US-A- 5 928 083
- US-B1- 6 200 221
- PATENT ABSTRACTS OF JAPAN vol. 2003, no. 12, 5 December 2003 (2003-12-05) & JP 2004 162768 A (NOK CORP), 10 June 2004 (2004-06-10)

## Description

### BACKGROUND OF THE INVENTION

### (I) FIELD OF THE INVENTION

The present invention relates to a power transmission device for transmitting power from a vehicular driving source to, for example, a compressor for a vehicular air conditioner.

### (II) DESCRIPTION OF THE RELATED ART

A generally-known power transmission device includes a pulley to which power is transmitted from a power source via a belt and a hub which is arranged on the inner peripheral surface side of the pulley and rotates together with a driven shaft. Also, a cushion rubber is provided between the pulley and the hub. The power transmission device transmits a turning force from the power source to the driven shaft, and decreases rotation fluctuations transmitted from the power source to the pulley.

The system in which power is transmitted from the driving source to the power transmission device via the belt is a conventional drive system. On the other hand, in recent years, a new drive system has been developed. In the new drive system, power is transmitted directly from a driving shaft rotated by the power of driving source to the power transmission device without the use of the belt.

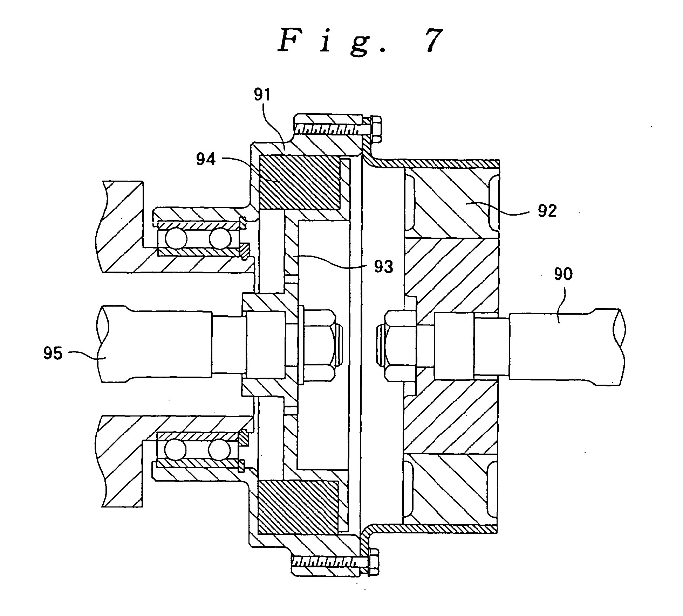

The power transmission device of this drive system includes a first rotor 91 arranged on the outer peripheral surface side of a driving shaft 90, a first cushion rubber 92 arranged between the driving shaft 90 and the first rotor 91, a second rotor 93 which is arranged on the inner peripheral surface side of the first rotor 91 and is rotated together with a driven shaft 95, and a second cushion rubber 94 arranged between the first rotor 91 and the second rotor 93 (refer to Fig. 7). This power transmission device allows a radial position shift between the driving shaft 90 and the first rotor 91 by means of the first cushion rubber 92. Also, this power transmission device decreases rotation fluctuations transmitted from the driving source to the driving shaft 90 by means of the cushion rubbers 92 and 94. Further, this power transmission device transmits the turning force from the driving shaft 90 to the driven shaft 95.

In the conventional drive system, the belt for transmitting power from the driving source to the pulley is made of an elastic material such as rubber. Therefore, the rotation fluctuations transmitted from the power source to the pulley are decreased by the belt.

However, in the case where power is transmitted from the driving shaft 90 to the power transmission device without the use of the belt, the rotation fluctuations are not decreased by the belt. Therefore, the rotation fluctuations transmitted to the power transmission device increase as compared with the conventional drive system. Also, if large rotation fluctuations are transmitted to the driven shaft 95, vibration and noise of driven equipment rotated by the driven shaft 95 increase. Therefore, in order to decrease the rotation fluctuations transmitted to the driven shaft 95 as in the case of the conventional drive system, it is necessary to make the cushion rubber 94 large. If the cushion rubber 94 is made large, the size of power transmission device increases.

In the US-patent US 5,928,083 a flexible coupling assembly installed between a driving member and a driven machine or device according to the preamble of claim 1 is disclosed. The flexible coupling assembly includes a one-way over-running clutch mechanism incorporated therein and transfers torque from the driving member to the driven device, while compensating for any angular and offset misalignment between two coupling members. The clutch mechanism provides driving torque in one rotational direction and over-running capability in the other, thereby accommodating large torque fluctuations from the driving member. This clutch mechanism is integrated within an intermediate housing assembly that is easily coupled between two jaw-type shaft couplings.

Further, from the French patent application FR-A-2 853 372 a disengagement element of a power transmission system according to the preamble of claim 2 is disclosed, which comprises an outer ring, and an inner ring, a plurality of contact members which are arranged between the outer ring and the inner ring. These contact members are deformable and are in contact with the outer ring and the inner ring. In order to prevent the transmitting of the turning force between the outer ring and the inner ring, it is provided that the contact members can be deformed.

### SUMMARY OF THE INVENTION

Accordingly, an object of the present invention is to provide a power transmission device capable of transmitting power from a driving shaft to a driven shaft while efficiently decreasing rotation fluctuations without an increase in size of a cushion.

The object is solved by the independent claim 1 or 2.

Thereby, only the turning force to one side in the rotation direction is transmitted from the first rotor to the second rotor. When the rotational speed of the first rotor rotating to one side in the rotation direction is decreased by rotation fluctuations transmitted from the driving shaft, the first rotor is going to rotate to the other side in the rotation direction in contrast with the second rotor. However, since the turning force to the other side in the rotation direction of the first rotor is not transmitted to the second rotor, the fluctuation that decreases the rotational speed is not transmitted to the second rotor. That is to say, the rotation fluctuations transmitted from the driving shaft can be decreased efficiently. Therefore, the cushion can be simplified as compared with the case where the rotation fluctuations are buffered by the cushion only. Thereby, the size of device can be decreased and the cost can be reduced.

The above and other objects, features, and advantages of the present invention will become more apparent from the following description and the accompanying drawings.

### BRIEF DESCRIPTION OF THE DRAWINGS

Fig. 1 is a side sectional view of a power transmission device in accordance with a first embodiment of the present invention;
Fig. 2 is a partially sectioned front view of an isolation mechanism;
Fig. 3 is a side sectional view of a power transmission device, showing a state in which balls of an isolation mechanism moved to the inside in the radial direction;
Fig. 4 is a graph showing fluctuations in rotational speeds of first and second rotating bodies;
Fig. 5 is a side sectional view of a power transmission device in accordance with a second embodiment of the present invention;
Fig. 6 is a sectional view taken along the line A-A of Fig. 5; and
Fig. 7 is a side sectional view of a conventional power transmission device.

### DESCRIPTION OF THE PREFERRED EMBODIMENTS

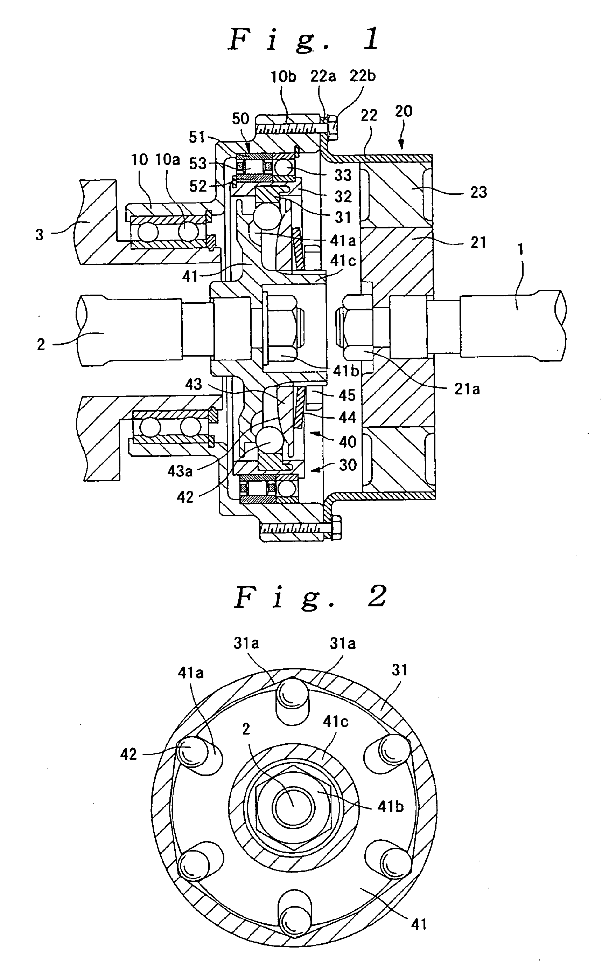

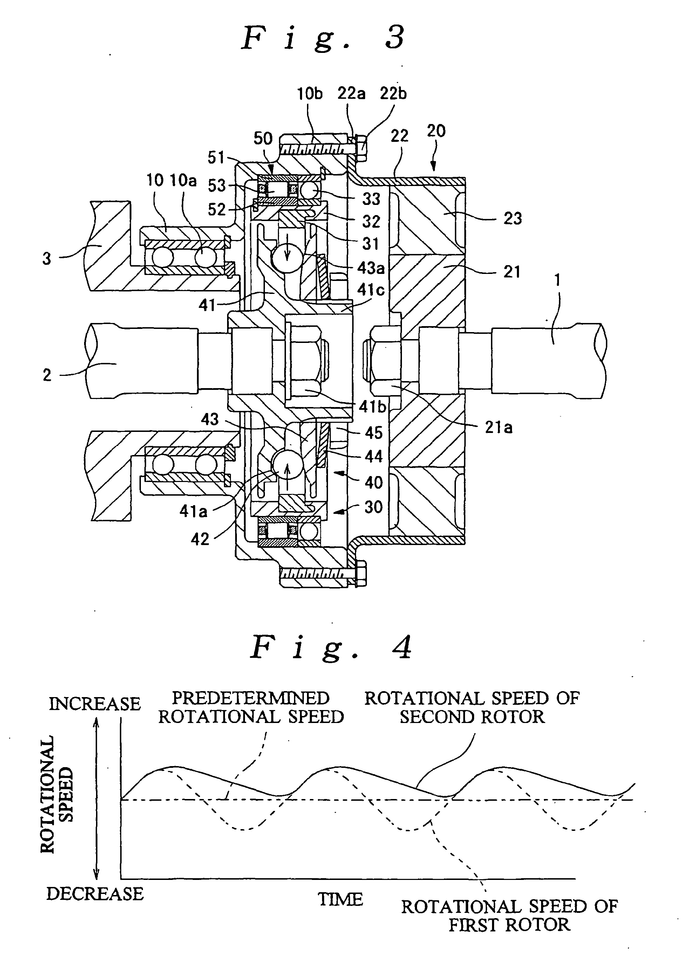

Figs. 1 to 4 show a first embodiment of the present invention. Fig. 1 is a side sectional view of a power transmission device in accordance with the first embodiment of the present invention, Fig. 2 is a partially sectioned front view of an isolation mechanism, Fig. 3 is a side sectional view of a power transmission device, showing a state in which balls of the isolation mechanism moved to the inside in the radial direction, and Fig. 4 is a graph showing fluctuations in rotational speeds of first and second rotating bodies.

The power transmission device in accordance with the first embodiment includes a first rotor 10 arranged on the outer peripheral surface side of a driving shaft 1 rotated by the power of an engine, a rubber joint 20 arranged between the driving shaft 1 and the first rotor 10, a second rotor 30 arranged on the inner peripheral surface side of the first rotor 10, an isolation mechanism 40 arranged between the second rotor 30 and a driven shaft 2, and a publicly-known one-way clutch 50 arranged between the first rotor 10 and the second rotor 30.

The driving shaft 1 is the driving shaft for a power steering pump installed on the engine. To the driving shaft 1, the turning force of an engine crankshaft is transmitted via a gear mechanism, not shown. That is to say, the driving shaft 1 rotates in one direction of rotation.

The driven shaft 2 is the driving shaft for a compressor 3 of an air conditioner, which is installed on the engine. When the driven shaft 2 is rotated, a refrigerant is compressed by the compressor 3.

The first rotor 10 is constructed in a ring shape, and the inner peripheral surface thereof on one end face side in the axial direction has a larger inside diameter than the inner peripheral surface on the other end face side in the axial direction. The first rotor 10 is formed of a thermosetting resin or a metallic material. On the inner peripheral surface on the other end face side in the axial direction of the first rotor 10, a bearing 10a is provided. The first rotor 10 is rotatably supported at the tip end of the compressor 3 by means of the bearing 10a. The first rotor 10 is provided with a plurality of threaded holes 10b arranged at intervals in the circumferential direction.

The rubber joint 20 has an inner periphery-side ring 21 rotating together with the driving shaft 1, an outer periphery-side ring 22 arranged coaxially with the inner periphery-side ring 21, and a cushion rubber 23 arranged between the inner periphery-side ring 21 and the outer periphery-side ring 22.

The inner periphery-side ring 21 is formed of a metallic material. The tip end portion of the driving shaft 1 is inserted through the inner periphery-side ring 21 in the axial direction. The inner periphery-side ring 21 is fixed to the tip end portion of the driving shaft 1 in the rotation direction by a spline fit, and is fixed in the axial direction by a nut 21a.

The outer periphery-side ring 22 is formed of a metallic material. The outer periphery-side ring 22 abuts against the axial one end face side of the first rotor 10 in the axial direction. The outer periphery-side ring 22 is provided with a plurality of mounting holes 22a, and each of the mounting holes 22a is provided at a position corresponding to each of the threaded holes 10b in the first rotor 10. The outer periphery-side ring 22 is fixed to the first rotor 10 by a plurality of bolts 22b.

The cushion rubber 23 is formed of a rubber material such as EPDM or IIR. The cushion rubber 23 is vulcanizingly bonded to the inner periphery-side ring 21 and the outer periphery-side ring 22.

The second rotor 30 has an inner ring 31 and a resin ring 32 provided on the outer peripheral surface side of the inner ring 31. The inner ring 31 is provided with a plurality of first taper surfaces 31a on the inner peripheral surface. The resin ring 32 is formed of a thermoplastic resin. The second rotor 30 is rotatably supported on the first rotor 10 by means of a bearing 33. The bearing 33 is arranged between the inner peripheral surface of the axial one end face side of the first rotor 10 and the resin ring 32. Each of the first taper surfaces 31a of the inner ring 31 abuts against a ball 42, described later, from the outside in the radial direction.

The isolation mechanism 40 has a hub 41 rotating together with the driven shaft 2, a plurality of ball grooves 41a provided in the hub 41, a plurality of balls 42 arranged in the ball grooves 41a, a pressing member 43 for pushing the balls 42 from one side in the axial direction, a publicly-known belleville spring 44 for urging the pressing member 43 to one side in the axial direction, and a nut 45 for keeping the belleville spring 44 in a compressed state.

The hub 41 is formed of a metallic material and has a disc shape. The tip end portion of the driven shaft 2 is inserted through the hub 41 in the axial direction. The hub 41 is fixed to the tip end portion of the driven shaft 2 in the rotation direction by a spline fit. Also, the hub 41 is fixed to the tip end portion of the driven shaft 2 in the axial direction by a nut 41b. On the axial one end face of the hub 41, a cylindrical extending portion 41c is provided, and the extending portion 41c is arranged on the outer peripheral surface side of the nut 41b. The ball grooves 41a are provided at intervals in the circumferential direction on the outer peripheral surface side of the axial one end face of the hub 41. Each of the metallic balls 42 can be moved in the ball groove 41a in the radial direction of the hub 41. The ball groove 41a abuts against the ball 42 in the circumferential direction of the hub 41. Also, the radial inside of the ball groove 41a is formed into a concave shape as compared with the radial outside. Therefore, the ball groove 41a holds the ball 42 having moved to the radial inside so that the ball 42 does not move to the radial outside.

The pressing member 43 is formed of a metallic material and has a disc shape. The pressing member 43 allows the extending portion 41c of the hub 41 to be inserted therethrough. On one end face of the pressing member 43 is provided a second taper surface 43a. The second taper surface 43a is convex to the ball groove 41a side gradually from the radial outside to the inside. The second taper surface 43a abuts against the balls 42 in the axial direction. When the pressing member 43 abuts against the balls 42 in the axial direction, the balls 42 are guided to the radial outside. Therefore, the balls 42 abut against the first taper surfaces 31a of the inner ring 31.

The extending portion 41c of the hub 41 can be inserted through the belleville spring 44. The belleville spring 44 abuts against the pressing member 43 in the axial direction.

The nut 45 threadedly engages with the outer peripheral surface of the extending portion 41c of the hub 41 to hold the belleville spring 44 in a state of being compressed in the axial direction.

The one-way clutch 50 has an outer ring 51 fitted on the inner peripheral surface on the axial one end face side of the first rotor 10, an inner ring 52 fitted on the outer peripheral surface of the resin ring 32 of the second rotor 30, and a plurality of roller members 53 provided between the outer ring 51 and the inner ring 52. The roller members 53. are provided at intervals in the circumferential direction. The roller members 53 are urged to one side in the circumferential direction of the one-way clutch 50 by a plurality of spring, not shown. The one-way clutch 50 transmits only the turning force to one side in the rotation direction of the first rotor 10 to the second rotor 30.

The isolation mechanism 40 and the one-way clutch 50 are provided in a space closed by the driving shaft 1, the first rotor 10, the rubber joint 20, and the compressor 3. Thereby, the isolation mechanism 40 and the one-way clutch 50 are not influenced by water and dust coming from the outside.

For the above-described power transmission device, when the driving shaft 1 is rotated by the power from the engine, the turning force of the driving shaft 1 is transmitted to the first rotor 10 via the rubber joint 20. The power steering pump and the compressor 3 are installed on the engine. Therefore, the driving shaft 1 and the first rotor 10 may sometimes shift in the radial direction. However, since the turning force of the driving shaft 1 is transmitted to the first rotor 10 via the cushion rubber 23, the positional shift in the radial direction of the driving shaft 1 and the first rotor 10 is allowed.

Also, rotation fluctuations of an engine crankshaft are transmitted to the driving shaft 1. Therefore, the rotation of the driving shaft 1 is accompanied by rotation fluctuations. However, since the turning force of the driving shaft 1 is transmitted to the first rotor 10 via the cushion rubber 23, the rotation fluctuations of the first rotor 10 is smaller than those of the driving shaft 1.

Next, the turning force of the first rotor 10 is transmitted to the second rotor 30 via the one-way clutch 50. At this time, the first rotor 10 rotates at a predetermined rotational speed to one side in the rotation direction like the driving shaft 1. Also, the rotational speed of the first rotor 10 is increased and decreased by the rotation fluctuations. On the other hand, the one-way clutch 50 transmits only the turning force to one side in the rotation direction. For this reason, when the rotational speed of the first rotor 10 is decreased by the rotation fluctuation and the first rotor 10 rotates to the other side in the rotation direction in contrast with the second rotor 30, the turning force to the other side in the rotation direction is not transmitted to the second rotor 30. Therefore, the rotation fluctuation that decreases the rotational speed is not transmitted to the second rotor 30.

That is to say, the first rotor 10 repeats an increase and a decrease in rotational speed in contrast with a predetermined rotational speed by means of the rotation fluctuations. However, when the rotational speed of the first rotor 10 is decreased, the rotational speed of the second rotor 30 is merely decreased slightly by the inertia force and small rotation resistance. The inertia force is force by which the second rotor 30 is going to keep its rotational speed. The rotation resistance is produced by the bearing 33 etc. Therefore, the fluctuation that decreases the rotational speed of the second rotor 30 becomes small, and the rotation fluctuations of the second rotor 30 are efficiently decreased in contrast with the rotation fluctuations of the first rotor 10 (refer to Fig. 4).

Next, the turning force of the second rotor 30 is transmitted to the driven shaft 2 via the isolation mechanism 40.

When the driven shaft 2 becomes incapable of being rotated because of, for example, seizure of the compressor 3, torque of a predetermined magnitude or greater is produced between the second rotor 30 and the driven shaft 2. Thereby, the balls 42 are pushed toward the radial inside by the first taper surfaces 31a of the inner ring 31, and hence the balls 42 move to the radial inside against the pressing force of the pressing member 43 (refer to Fig. 3). The ball 42 move in the ball grooves 41a. Thereby, the ball 42 is held on the radial inside of the ball groove 41a. Also, the ball 42 is held at a position at which the ball 42 cannot abut against the first taper surface 31a. Therefore, the inner ring 31 runs idle with respect to the hub 41, so that the turning force transmitted from the second rotor 30 to the driven shaft 2 is isolated.

As described above, the power transmission device of this embodiment is provided with the one-way clutch 50, which transmits only the turning force to one side in the rotation direction, between the first rotor 10 and the second rotor 30. Therefore, of the rotation fluctuations of the first rotor 10, a fluctuation that decreases the rotational speed is not transmitted to the second rotor 30. For this reason, the rotation fluctuations transmitted from the engine to the driving shaft 1 can be decreased efficiently by the one-way clutch 50. Therefore, the rotation fluctuations can be decreased efficiently as compared with the case where the rotation fluctuations are buffered by the cushion rubber 23 only. Also, the size of the cushion rubber 23 is decreased, by which the size of device can be decreased and the cost can be reduced. Also, the occurrence of vibration and noise of driven equipment rotated by the driven shaft 2 can surely be prevented.

Also, the isolation mechanism 40 and the one-way clutch 50 are provided in a space closed by the driving shaft 1, the first rotor 10, the rubber joint 20, and the compressor 3. Thereby, the isolation mechanism 40 and the one-way clutch 50 are not influenced by water and dust coming from the outside. Therefore, there is no need for providing a special-purpose seal member for the isolation mechanism 40 and the one-way clutch 50, so that the manufacturing cost of the device can be reduced.

Also, if a turning force of a predetermined magnitude or greater is produced between the second rotor 30 and the driven shaft 2, the turning force transmitted from the second rotor 30 to the driven shaft 2 is isolated by the isolation mechanism 40. Therefore, even if the driven shaft 2 becomes incapable of being rotated because of, for example, seizure of the compressor 3, an excessive load is not applied to an oil pump driven by the driving shaft 1, the engine, or the like.

Also, the isolation mechanism 40 includes the balls 42 that abut against the first taper surfaces 31a of the second rotor 30, the hub 41 having ball grooves 41a against which the balls 42 abut in the circumferential direction, and the pressing member 43 for guiding the balls 42 to the radial outside. If torque of a predetermined magnitude or greater is produced between the second rotor 30 and the driven shaft 2, the balls 42 move to the radial inside against the pressing force of the pressing member 43. Thereby, the abutment of the balls 42 against the first taper surfaces 31a is released, so that the turning force is not transmitted from the second rotor 30 to the hub 41. Therefore, when the torque of a predetermined magnitude or greater is produced between the second rotor 30 and the driven shaft 2, the turning force is surely isolated.

In this embodiment, the driven shaft 2 of the compressor 3 for a vehicular air conditioner is rotated by the turning force of the driving shaft 1 for the power steering pump. However, the present invention can be used for any equipment having a rotating shaft driven by power from the outside, for example, a power steering pump.

Also, in this embodiment, the turning force of engine crankshaft is transmitted to the driving shaft 1 via a gear mechanism. However, a pulley, not shown, can be provided on the driving shaft 1 to transmit the turning force of engine crankshaft to the pulley by using a belt.

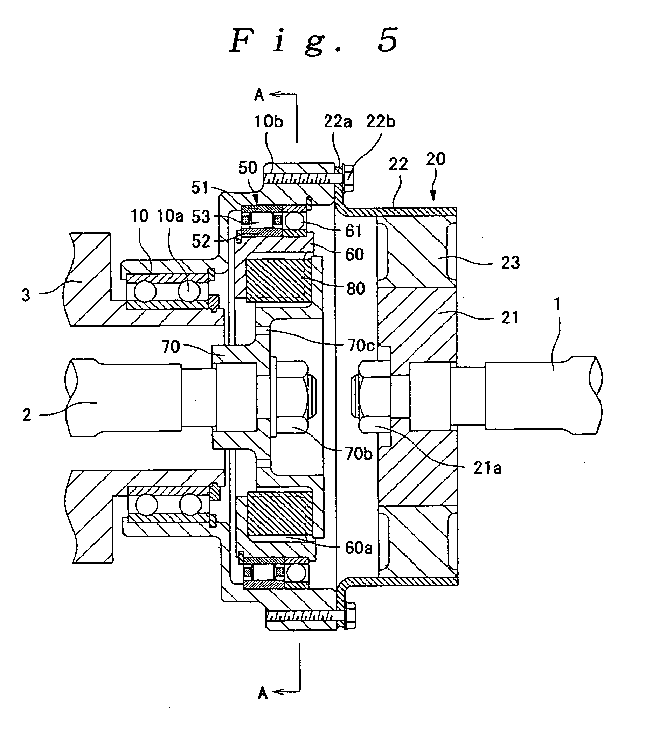

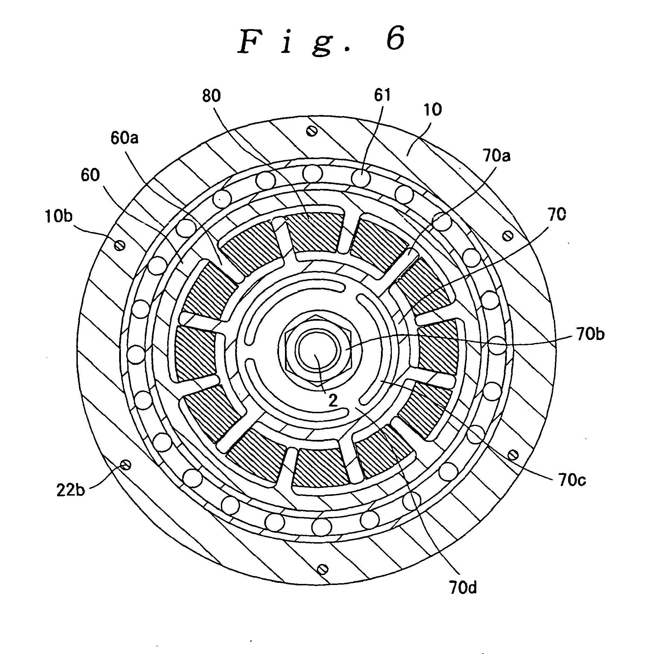

Figs. 5 and 6 show a second embodiment of the present invention. Fig. 5 is a side sectional view of a power transmission device in accordance with the second embodiment of the present invention, and Fig. 6 is a sectional view taken along the line A-A of Fig. 5. In these figures, the same reference characters are applied to elements that are equivalent to those in the first embodiment.

The power transmission device of the second embodiment includes a first rotor 10, a rubber joint 20, and a one-way clutch 50, which are the same as those in the first embodiment, and a second rotor 60 arranged on the inner peripheral surface side of the first rotor 10, a hub 70 arranged on the inner peripheral surface side of the second rotor 60, and divided rubbers 80 arranged between the second rotor 60 and the hub 70. The hub 70 corresponds to an isolation mechanism described in the claims. The divided rubbers 80 correspond to a second cushion described in the claims.

The second rotor 60 is formed of a thermosetting resin or a metallic material. A bearing 61 is arranged between the inner peripheral surface on the axial one end face side of the first rotor 10 and the second rotor 60. The second rotor 60 is rotatably supported on the first rotor 10 by means of the bearing 61. On the inner peripheral surface side of the second rotor 60, a plurality of protruding portions 60a are provided at intervals in the circumferential direction. Each of the protruding portions 60a extends in the axial direction.

The hub 70 is formed of a metallic material and has a disc shape. The tip end portion of a driven shaft 2 is inserted through the hub 70. The hub 70 is fixed to the tip end portion of the driven shaft 2 in the rotation direction by a spline fit. The hub 70 is fixed to the tip end portion of the driven shaft 2 in the axial direction by a nut 70b. On the outer peripheral surface side of the hub 70, a plurality of protruding portions 70a are provided at intervals in the circumferential direction. Each of the protruding portions 70a extends in the axial direction. The protruding portions 70a are arranged alternately with the protruding portions 60a in the circumferential direction. The protruding portions 70a and the protruding portions 60a face to each other at intervals in the circumferential direction.

The hub 70 is provided with three slit portions 70c arranged at a predetermined position in the radial direction. The slit portions 70c are provided at intervals in the circumferential direction. The slit portions 70c form three connecting portions 70d. The connecting portions 70d transmit a turning force from the outer peripheral surface side of the hub 70 to the inner peripheral surface side of the hub 70.

The divided rubbers 80 each are formed of a rubber material such as EPDM or IIR and have a block shape. The divided rubbers 80 are arranged between the protruding portions 60a of the second rotor 60 and the protruding portions 70a of the hub 70.

For the above-described power transmission device, when a driving shaft 1 is rotated by the power from the engine, the turning force of the driving shaft 1 is transmitted to the first rotor 10 via the rubber joint 20. Also, the turning force of the first rotor 10 is transmitted to the second rotor 60 via the one-way clutch 50. The effects of a cushion rubber 23 and the one-way clutch 50 at this time are the same as those of the first embodiment.

Next, the turning force of the second rotor 60 is transmitted to the hub 70 via the divided rubbers 80. Therefore, the rotation fluctuations transmitted to the hub 70 are smaller than the rotation fluctuations of the second rotor 60.

Next, the turning force of the hub 70 is transmitted to the driven shaft 2 via the connecting portions 70d.

When the driven shaft 2 becomes incapable of being rotated because of, for example, seizure of a compressor 3, torque of a predetermined magnitude or greater is produced between the second rotor 60 and the driven shaft 2. Thereby, the connecting portions 70d are broken. Therefore, the turning force transmitted from the second rotor 60 to the driven shaft 2 can be isolated.

Thus, in the power transmission device of this embodiment, the rotation fluctuations decreased by the cushion rubber 23 and the one-way clutch 50 can further be decreased by the divided rubbers 80. Therefore, the occurrence of vibration and noise of driven equipment rotated by the driven shaft 2 can surely be prevented.

Also, the turning force transmitted from the second rotor 60 to the driven shaft 2 is isolated by the breakage of the connecting portions 70d. Therefore, even if the driven shaft 2 becomes incapable of being rotated because of, for example, seizure of the compressor 3, an excessive load is not applied to an oil pump driven by the driving shaft 1, an engine, or the like. Further, since the isolation mechanism has a simple construction, the space for the device can be saved.

The preferred embodiments described in this specification are illustrative and not restrictive. The scope of invention is given by the appended claims, and all changes and modifications included in the meaning of claims are embraced in the present invention.

## Claims

1. A power transmission device for transmitting a turning force in a predetermined direction from a driving shaft (1) to a driven shaft (2) of a driven equipment (3), comprising:
a first rotor (10);
a cushion (20) for transmitting the turning force in the predetermined direction from the driving shaft (1) to the first rotor (10);
a second rotor (30) which is arranged coaxially with the first rotor (10), and the second rotor (30) which is capable of rotating together with the driven shaft (2); and
a one-way clutch (50) for transmitting the turning force in the predetermined direction from the first rotor (10) to the second rotor (30), **characterized that**,
an isolation mechanism (40) provided to isolate the turning force transmitted from the second rotor (30) to the driven shaft (2) if torque of a predetermined magnitude or greater is produced between the second rotor (30) and the driven shaft (2);
wherein the isolation mechanism (40) has:
a third rotor (41) which is arranged on the inner peripheral surface side of the second rotor (30) and which rotates together with the driven shaft (2);
a plurality of ball grooves (41a) provided on the outer peripheral surface side of the third rotor (41) and disposed at intervals in the circumferential direction of the third rotor (41);
a plurality of balls (42) which abut against the ball grooves (41a) in the circumferential direction of the third rotor (41), and which are capable of moving in the ball grooves (41a) in the radial direction of the third rotor (41);
a plurality of first taper surfaces (31a) which are provided on the inner peripheral surface of the second rotor (30), and which are capable of abutting against the balls (42) from the radial outside;
a pressing member (43) for pushing the balls (42) from one side in the axial direction of the third rotor (41); and
a second taper surface (43a) which is provided on the pressing member (43), so as to abut against the balls (42) from one side in the axial direction of the third rotor (41), and which is convex to the third rotor (41) side gradually from the radial outside to the inside and
the balls (42) abut against the first taper surfaces (31a) to transmit the turning force from the second rotor (30) to the third rotor (41), and if torque of the predetermined magnitude or greater is produced between the second rotor (30) and the third rotor (41), the balls (42) are pushed by the first taper surfaces (31a), and by which the balls (42) move to the radial inside against the pressing force of the pressing member (43) for isolating the turning force transmitted from the second rotor (30) to the third rotor (41).

2. A power transmission device for transmitting a turning force in a predetermined direction from a driving shaft (1) to a driven shaft (2) of a driven equipment (3), comprising:
a first rotor (10);
a cushion (20) for transmitting the turning force in the predetermined direction from the driving shaft (1) to the first rotor (10);
a second rotor (60) which is arranged coaxially with the first rotor (10), and the second rotor (60) which is capable of rotating together with the driven shaft (2);
an isolation mechanism (70) provided to isolate the turning force transmitted from the second rotor (60) to the driven shaft (2) if torque of a predetermined magnitude or greater is produced between the second rotor (60) and the driven shaft (2) ;
wherein the isolation mechanism (70) has a connecting portion (70d) for transmitting the turning force from the second rotor (60) to the driven shaft (2),
**characterized in that**
a one-way clutch (50) for transmitting the turning force in the predetermined direction from the first rotor (10) to the second rotor (60) is provided, and **in that**
the connecting portion (70d) isolates the turning force, which is transmitted from the second rotor (60) to the driven shaft (2), by means of breakage if torque of the predetermined magnitude or greater is produced between the second rotor (60) and the driven shaft (2).

3. The power transmission device according to claim 2,
**characterized that**,
a second cushion (80) is provided to transmit the turning force from the second rotor (60) to the isolation mechanism (70).

4. The power transmission device according to claim 1 or 2,
**characterized that**
the first rotor (10) is rotatably supported on the driven equipment (3), and
the one-way clutch (50) is arranged in a space closed by the driving shaft (1), the cushion (20), the first rotor (10), and the driven equipment (3).

## Patentansprüche

1. Kraftübertragungsvorrichtung zum Übertragen einer Drehkraft in eine vorgegebene Richtung von einer Antriebswelle (1) zu einer angetriebenen Welle (2) eines angetriebenen Geräts (3), wobei die Kraftübertragungsvorrichtung aufweist:
einen ersten Rotor (10);
einen Puffer (20) zum Übertragen der Drehkraft in die vorgegebene Richtung von der Antriebswelle (1) zu dem ersten Rotor (10);
einen zweiten Rotor (30), der zu dem ersten Rotor (10) koaxial angeordnet ist, und wobei der zweite Rotor (30) in der Lage ist, sich zusammen mit der angetriebenen Welle (2) zu drehen; und
eine Einwegkupplung (50) zum Übertragen der Drehkraft in die vorgegebene Richtung von dem ersten Rotor (10) zu dem zweiten Rotor (30), **gekennzeichnet durch**
einen Isolationsmechanismus (40), der vorgesehen ist, um die Drehkraft zu isolieren, die von dem zweiten Rotor (30) zu der angetriebenen Welle (2) übertragen wird, falls zwischen dem zweiten Rotor (30) und der angetriebenen Welle (2) ein Drehmoment einer vorgegebenen Größe oder ein Größeres erzeugt wird;
wobei der Isolationsmechanismus (40) aufweist:
einen dritten Rotor (41), der auf der inneren Umfangsoberflächenseite des zweiten Rotors (30) angeordnet ist, und der sich zusammen mit der angetriebenen Welle (2) dreht;
eine Vielzahl von Kugelrillen (41a), die auf der äußeren Umfangsoberflächenseite des dritten Rotors (41) vorgesehen sind und in Abständen in der Umfangsrichtung des dritten Rotors (41) angeordnet sind;
eine Vielzahl von Kugeln (42), die gegen die Kugelrillen (41a) in der Umfangsrichtung des dritten Rotors (41) stoßen, und die in der Lage sind, dass sie sich in den Kugelrillen (41a) in der radialen Richtung des dritten Rotors (41) bewegen;
eine Vielzahl von ersten spitz zulaufenden Oberflächen (31a), die auf der inneren Umfangsoberfläche des zweiten Rotors (30) vorgesehen sind, und die in der Lage sind, dass sie von der radialen Außenseite gegen die Kugeln (42) stoßen;
eine Presseinheit (43) zum Drücken der Kugeln (42) von einer Seite in der Axialrichtung des dritten Rotors (41); und
eine zweite spitz zulaufende Oberfläche (43), die derart auf der Presseinheit (43) vorgesehen ist, dass sie von einer Seite in der Axialrichtung des dritten Rotors (41) gegen die Kugeln (42) stößt, und die von der radialen Außenseite zu der Innenseite allmählich konvex zu der dritten Seite des Rotors (41) ist, und
wobei die Kugeln (42) gegen die ersten spitz zulaufenden Oberflächen (31a) stoßen, um die Drehkraft von dem zweiten Rotor (30) zu dem dritten Rotor (41) zu übertragen, und falls zwischen dem zweiten Rotor (30) und dem dritten Rotor (41) das Drehmoment mit der vorgegebenen Größe oder das Größere erzeugt wird, werden die Kugeln (42) **durch** die ersten spitz zulaufenden Oberflächen (31a) gedrückt und wodurch sich die Kugeln (42) gegen die Druckkraft der Druckeinheit (43) zu der radialen Innenseite zum Isolieren der Drehkraft, die von dem zweiten Rotor (30) zu dem dritten Rotor (41) übertragen wird, bewegen.

2. Kraftübertragungsvorrichtung zum Übertragen einer Drehkraft in eine vorgegebene Richtung von einer Antriebswelle (1) zu einer angetriebenen Welle (2) eines angetriebenen Geräts (3), wobei die Kraftübertragungsvorrichtung aufweist:
einen ersten Rotor (10);
einen Puffer (20) zum Übertragen der Drehkraft in die vorgegebene Richtung von der Antriebswelle (1) zu dem ersten Rotor (10);
einen zweiten Rotor (60), der zu dem ersten Rotor (10) koaxial angeordnet ist, und wobei der zweite Rotor (60) in der Lage ist, sich zusammen mit der angetriebenen Welle (2) zu drehen;
einen Isolationsmechanismus (70), der vorgesehen ist, um die Drehkraft zu isolieren, die von dem zweiten Rotor (60) zu der angetriebenen Welle (2) übertragen wird, falls zwischen dem zweiten Rotor (60) und der angetriebenen Welle (2) ein Drehmoment einer vorgegebenen Größe oder ein Größeres erzeugt wird;
wobei der Isolationsmechanismus (70) einen Verbindungsabschnitt (70d) zum Übertragen der Drehkraft von dem zweiten Rotor (60) zu der angetriebenen Welle (2) aufweist, **dadurch gekennzeichnet, dass**
eine Einwegkupplung (50) zum Übertragen der Drehkraft in die vorgegebene Richtung von dem ersten Rotor (10) zu dem zweiten Rotor (60) vorgesehen ist, und, dass
der Verbindungsabschnitt (70d) die Drehkraft, die von dem zweiten Rotor (60) zu der angetriebenen Welle (2) übertragen wird, mittels eines Bruchs isoliert, falls zwischen dem zweiten Rotor (60) und der angetriebenen Welle (2) das Drehmoment der vorgegebenen Größe oder das Größere erzeugt wird.

3. Kraftübertragungsvorrichtung nach Anspruch 2, **dadurch gekennzeichnet, dass** ein zweiter Puffer (80) vorgesehen ist, um die Drehkraft von dem zweiten Rotor (60) zu dem Isolationsmechanismus (70) zu übertragen.

4. Kraftübertragungsvorrichtung nach Anspruch 1 oder 2, **dadurch gekennzeichnet, dass** der erste Rotor (10) auf dem angetriebenen Gerät (3) drehbar gelagert ist, und, dass die Einwegkupplung (50) in einem Raum angeordnet ist, der durch die Antriebswelle (1), den Puffer (20), den ersten Rotor (10) und das angetriebene Gerät (3) abgeschlossen ist.

## Revendications

1. Dispositif de transmission de puissance pour transmettre une force tournante dans une direction prédéterminée à partir d'un arbre menant (1) vers un arbre mené (2) d'un équipement d'entraînement (3) comprenant
- un premier rotor (10),
- un élément d'amortissement (20) pour transmettre la force tournante dans la direction prédéterminée à partir de l'arbre menant (1) vers le premier rotor (10),
- un second rotor (30) coaxial au premier rotor (10), le second rotor (30) pouvant tourner avec l'arbre mené (2), et
- un embrayage unidirectionnel (50) pour transmettre la force tournante dans la direction prédéterminée à partir du premier rotor (10) vers le second rotor (30),
**caractérisé par**
- un mécanisme d'isolation (40) pour isoler la force tournante transmise à partir du second rotor (30) vers l'arbre mené (2) si un couple d'amplitude prédéterminée ou supérieur à celle-ci est appliqué entre le second rotor (30) et l'arbre mené (2),
- le mécanisme d'isolation (40) ayant :
* un troisième rotor (41) sur la surface périphérique intérieure du second rotor (30) et tournant avec l'arbre mené (2),
* un ensemble de gorges à billes (41a) dans la surface périphérique extérieure du troisième rotor (41), ces gorges étant réparties à intervalle dans la direction périphérique du troisième rotor (41),
* un ensemble de billes (42) s'appuyant contre les gorges à billes (41a) dans la direction périphérique du troisième rotor (41), et pouvant se déplacer dans les gorges à billes (41a) suivant la direction radiale du troisième rotor (41),
* un ensemble de premières surfaces inclinées (31a) sur la surface périphérique intérieure du second rotor (30) et susceptible de s'appuyer contre les billes (42) à partir du côté extérieur radial,
* un organe de poussée (43) pour pousser les billes (42) d'un côté dans la direction axiale du troisième rotor (41), et
* une seconde surface inclinée (43a) sur l'organe de poussée (43) de façon à s'appuyer contre les billes (42) à partir d'un côté, dans la direction axiale du troisième rotor (41) et qui est convexe par rapport au côté du troisième rotor (41) en progressant du côté radial extérieur vers l'intérieur, et
* les billes (42) s'appuient contre les troisièmes surfaces inclinées (31a) pour transmettre la force tournante du second rotor (30) vers le troisième rotor (41) et si un couple d'amplitude prédéterminée ou supérieur à celle-ci est appliqué entre le second rotor (30) et le troisième rotor (41), les billes (42) sont poussées par les premières surfaces inclinées (31a) de sorte que les billes (42) se déplacent radialement vers l'intérieur contre la force de poussée de l'organe de poussée (43) pour isoler la force tournant transmise par le second rotor (30) vers le troisième rotor (41).

2. Dispositif de transmission de puissance pour transmettre une force tournante dans une direction prédéterminée à partir d'un arbre menant (1) vers un arbre mené (2) d'un équipement entraîné (3) comprenant
- un premier rotor (10),
- un élément d'amortissement (20) pour transmettre la force tournante dans la direction prédéterminée à partir de l'arbre menant (1) vers le premier rotor (10),
- un second rotor (60) coaxial au premier rotor (10), et le second rotor (60) est susceptible de tourner avec l'arbre mené (2),
- un mécanisme d'isolation (70) pour isoler la force tournante transmise à partir du second rotor (60) vers l'arbre mené (2) si un couple d'amplitude prédéterminée ou supérieur à celle-ci est appliqué entre le second rotor (60) et l'arbre mené (2),
- le mécanisme d'isolation (70) ayant une partie de connexion (70d) pour transmettre la force tournante à partir du second rotor (60) vers l'arbre mené (2),
**caractérisé par**
- un embrayage unidirectionnel (50) pour transmettre la force tournante dans la direction prédéterminée à partir du premier rotor (10) vers le second rotor (60), et
- la partie de connexion (70d) isole la force tournante transmise à partir du second rotor (60) vers l'arbre mené (2) par un moyen de rupture si un couple d'amplitude prédéterminée ou supérieur à celle-ci est appliqué entre le second rotor (60) et l'arbre mené (2).

3. Dispositif de transmission de puissance selon la revendication 2,
**caractérisé par**
un second élément d'amortissement (80) pour transmettre la force tournante à partir du second rotor (60) vers le mécanisme d'isolation (70).

4. Dispositif de transmission de puissance selon la revendication 1 ou 2,
**caractérisé en ce que**
- le premier rotor (10) est porté à rotation par l'équipement entraîné (3), et
- l'embrayage unidirectionnel (50) est logé dans l'espace délimité par l'arbre menant (1), l'élément d'amortissement (20), le premier rotor (10) et l'équipement entraîné (3).
